# EUROPÄISCHE PATENTSCHRIFT

(11) **EP 1 001 692 B1**
(45) Veröffentlichungstag und Bekanntmachung des Hinweises auf die Patenterteilung: **05.06.2002**
(21) Anmeldenummer: 98938700.6
(22) Anmeldetag: 22.07.1998
(51) Int. Cl.: A46B 9/04

(54) **BÜRSTE, INSBESONDERE FÜR EINE ELEKTROZAHNBÜRSTE**
BRUSH, IN PARTICULAR FOR AN ELECTRIC TOOTHBRUSH
BROSSE, NOTAMMENT POUR BROSSE A DENTS ELECTRIQUE

(30) Priorität: 07.08.1997 DE 19734287
(43) Veröffentlichungstag der Anmeldung: 24.05.2000
(73) Patentinhaber: CORONET-Werke Gesellschaft mit beschränkter Haftung, 69483 Wald-Michelbach (DE)
(72) Erfinder: WEIHRAUCH, Georg, D-69483 Wald-Michelbach (DE)
(74) Vertreter: Dipl.-Ing. Heiner Lichti, Dr. rer. nat. Dipl.-Phys. Jost Lempert, Dipl.-Ing. Hartmut Lasch
(86) Internationale Anmeldenummer: EP9804602
(87) Internationale Veröffentlichungsnummer: WO9907251

(56) Entgegenhaltungen:
- EP-A- 0 651 978
- DE-U- 8 606 012
- DE-U- 29 516 571
- GB-A- 108 829
- US-A- 5 173 983
- US-A- 5 613 262

## Beschreibung

Die Erfindung betrifft eine Bürste, insbesondere für eine Elektrozahnbürste, mit einem in wenigstens einer Richtung angetriebenen Bürstenkopf und daran befestigten Borsten.

Die Erfindung betrifft allgemein angetriebene Bürsten, insbesondere aber solche von Elektro-Zahnbürsten.

Für die Reinigungs- und Massagewirkung einer Zahnbürste auf Zähne und Zahnfleisch sind im wesentlichen zwei Faktoren maßgeblich, die unabhängig davon, ob die Zahnbürste manuell oder elektrisch betrieben wird, Geltung haben. Dies ist zum einen der Borstenbesatz, zum anderen sind es die Bewegungen, mit denen der Borstenbesatz über die Zähne und über das Zahnfleisch geführt wird. Beim manuellen Putzen überwiegen lineare Bewegungen entlang der Zahnreihe und Bewegungen senkrecht dazu (rot-weiß), doch sind diese meist von anderen mehr oder weniger unkontrollierten Bewegungskomponenten überlagert. Dadurch ist im allgemeinen eine vollfläche Bürstwirkung gewährleistet; die Borsten dringen ausreichend in die Zahnzwischenräume und auch in die feinen Fissuren der Zahnflächen ein. Dies wird noch durch besondere Maßnahmen am Borstenbesatz, z.B. V-förmig gestellte Borstenbündel, von der Ebene abweichende, konturierte Bürstflächen etc., unterstützt.

Bei Elektrozahnbürsten die der Benutzer meist in einer bestimmten Position hält und im wesentlichen in linearen Bewegungen führt, sind die Bewegungskomponenten gegenüber der unkontrollierten manuellen Führung der Handzahnbürste durch die Antriebsart beschränkt. Bei langgestreckten Bürstenköpfen ähnlich den Handzahnbürsten sind eine Kombination von linearer (axialer) und schwenkender Bewegung bekannt. Bei runden Bürstenköpfen werden Drehschwingungen, gegebenfalls überlagert von einer Auf- und Abbewegung in Borstenrichtung bevorzugt. Schließlich sind Bürstenköpfe mit einem Antrieb bekannt, bei dem einige wenige Borstenbündel meist paarweise in Drehschwingung versetzt werden. Je mehr Bewegungskomponenten um so komplizierter und störanfälliger ist der Antrieb.

Bei einer bekannten Elektrozahnbürste (US 5 173 983) ist der Bürstenkopf mit einem umlaufenden weichen Rand versehen, mit der der Bürstenkopf auf den Zahnflächen oder dem Zahnfleisch abgestützt wird. Innerhalb dieses weichen Umfangsrandes ist der Borstenbesatz vertieft befestigt. Die Borsten überragen den Umfangsrand. Sie sind ähnlich einen Schaufelrad angeordnet, erstrecken sich also vom Drehzentrum des Bürstenkopfes in drei gekrümmte Streifen nach außen. Die im Zentrum angeordnete Borsten sind etwas länger als die übrigen und laufen in einer Spitze zusammen, die insbesondere in die Interdentalräume und in die Räume zwischen Zahn und Zahnfleischrand eindringen soll. Bei diesem bekannten Bürstenkopf ist der Andruck der Borsten durch die Auflage des Umfangsrandes begrenzt. Er wird deshalb mit zunehmender Abnutzung der Borsten immer geringer. Ferner wird eine Bürstwirkung nur auf einen Teil des Bürstenkopfs erzielt, da zwischen den gekrümmten Borstenstreifen keine Borsten vorhanden sind, so daß die Effektivität leidet. Auch ist eine Bürstrichtung ausschließlich in Drehrichtung des Bürstenkopfs gegeben. Speisereste, Schmutz und Zahnpastareste setzen sich in dem vertieften Raum innerhalb des weichen Umfangrandes und im Bereich der unteren Enden der Borstenbündel ab.

Der Erfindung liegt die Aufgabe zugrunde, eine Bürste, insbesondere für Elektrozahnbürsten, vorzuschlagen, der auch bei einem einfachen Bewegungsantrieb für den Bürstenkopf zu vielfältigen Wirkrichtungen der Borsten führt.

Diese Aufgabe wird bei einem angetriebenen Bürstenkopf und daran befestigten Borsten dadurch gelöst, daß die Enden zumindest eines Teils der Borsten den ansonsten vollflächigen Borstenbesatz überragen und auf einer streifen- oder fleckartigen Hüllfläche liegen und daß zumindest die von den in Bewegungsrichtung des Bürstenkopfs vorlaufenden Borsten gebildete Begrenzungskante der Hüllfläche in einem von 90° verschiedenen Winkel zur Bewegungsrichtung des Bürstenkopfs verläuft.

Durch die winklige Anstellung der von den überstehenden Borsten gebildeten Begrenzungskante der Hüllfläche zur Bewegungsrichtung des Bürstenkopfs ergibt sich für die Bürstwirkung neben der durch den Antrieb vorgegebenen Bewegungskomponente wenigstens eine winklig dazu verlaufende Komponente. Ist die Begrenzungskante nicht linear, sondern mehrfach abgewinkelt oder gewölbt oder sind mehrere Hüllflächen mit unterschiedlichen Anstellwinkeln zur Bewegungsrichtung des Antriebs vorhanden, so ergeben sich eine Vielzahl von Bewegungsrichtungen mit entsprechend vielfältiger Reinigungs- und Massagewirkung.

Dabei bleibt stets eine vollflächige Bürstwirkung durch den niedrigeren vollflächigen Borstenbesatz gewährleistet. auf diesem Borstenbesatz stützt sich der Bürstenkopf beim Bürsten ab, während die ihn überragenden Borsten auch in die Interdentalräume und unter den Zahnfleischrand greifen können.

Die von den Borsten gebildete vorlaufende und nachlaufende Begrenzungskante der Hüllfläche können im wesentlichen parallel verlaufen, so daß sich streifenförmige Bürstflächen ergeben. Die beiden Begrenzungskanten können auch unter verschiedenen Winkeln zur Bewegungsrichtung des Bürstenkopfs verlaufen, so daß sich fleckartige Bürstflächen ergeben, die insbesondere bei einem oszillierenden Antrieb besonders wirksam sind, da je nach Bewegungsrichtung des Antriebs weitere Bewegungskomponenten in unterschiedlichen Richtungen überlagert werden.

In den abhängigen Ansprüchen 4 bis 11 sind einige bevorzugte Ausführungsformen für einen um eine Drehachse rotierend oder oszillierend angetriebenen Bürstenkopf gekennzeichnet. Unter diesen Ausführungsformen seien hier nur zwei herausgegriffen. Bei einer spiralig verlaufenden Hüllfläche wird die Dreh- bzw. Drehschwingbewegung durch zusätzliche Kreisbewegungen mit variablem Radius überlagert. Ähnliches gilt für die S-förmige Ausbildung der Hüllfläche, insbesondere wenn mehrere S-förmige streifenförmige Hüllflächen nach Art eines Schaufelrades vorgesehen sind.

Die abhängigen Ansprüche 12 bis 14 kennzeichnen Ausführungsbeispiele für langgestreckte Bürstenköpfe mit einem Linearantrieb in Richtung der Längsachse, die gegebenenfalls noch von einer oszillierenden Schwenkbewegung senkrecht dazu überlagert sein kann. Dabei haben sich insbesondere zick-zack-förmig oder gepfeilt angeordnete, streifenförmige Hüllflächen als wirksam erwiesen.

Nachstehend ist die Erfindung anhand von in der Zeichnung gezeigten Ausführungsbeispielen beschrieben. In der Zeichnung zeigen:
- Figur 1: eine Ansicht auf den Bürstenkopf einer Elektrozahnbürste mit rotierendem, bzw. oszillierendem Bürstenkopf in herkömmlicher Bauform in einer Betriebsphase;
- Figuren 2 bis 4: verschiedene Ausführungsformen eines Bürstenkopfs mit rotierendem bzw. oszillierendem Antrieb und
- Figuren 5 bis 8: verschiedene perspektivische Ansichten und zugehörige Draufsichten auf einen linear angetriebenen und gegebenenfalls zusätzlich oszillierenden Bürstenkopf.

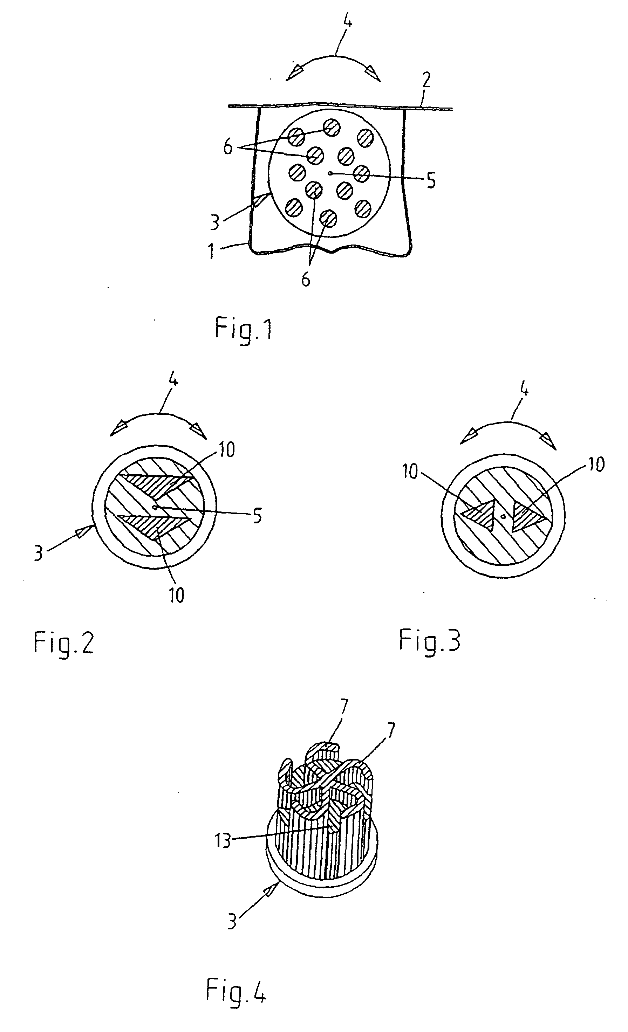

In den Figuren 1 ist ein Zahn 1 -in diesem Fall ein oberer Molar- und der Gingivarand 2 angedeutet. Ferner ist ein kreisrunder Bürstenkopf 3 gezeigt, der auf den Antrieb einer Elektrozahnbürste aufgesetzt ist. Der Bürstenkopf wird in einer rotatorischen oder oszillierenden Bewegung, gegebenenfalls zusätzlich auch in einer in Achsrichtung ausgerichteten Schwingbewegung angetrieben. Die Bewegung um die Achse 5 ist mit dem Doppelpfeil 4 angedeutet.

Bei dem Ausführungsbeispiel gemäß Figur 1 handelt es sich um einen herkömmlichen Bürstenkopf. Er ist mit im wesentlichen kreisförmigen Borstenbündeln 6 ausgestattet. Die Bündel 6 bzw. die Enden der das Bündel bildenden Borsten liegen auf einer im wesentlichen kreisförmigen Hüllfläche. Bei Antrieb des Bürstenkopfs beschreiben die Bündel Kreisbewegungen um die Drehachse. Ihre Wirkungsfläche auf der Oberfläche des Zahns 1 beschränkt sich bei einer oszillierenden Drehbewegung auf kurze Ringabschnitte. Weite Flächen des Zahns bleiben unbearbeitet oder erfahren nur eine Bearbeitung durch entsprechend intensive manuelle Führungsbewegungen der Elektrozahnbürste.

Bei den erfindungsgemäßen Ausführungsbeispielen gemäß Fig. 2 und 3 weist der Borstenbesatz Borsten auf, deren Enden in fleckartigen Hüllflächen 10 liegen. In Figur 2 sind die Hüllflächen 10 als gleichgerichtete Dreiecke ausgebildet und außerhalb der Drehachse 5 angeordnet. Bei dem Ausführungsbeispiel gemäß Figur 3 sind die dreieckförmigen Hüllflächen voneinander abgekehrt. In allen Fällen liegen die maßgeblichen Wirkflächen der Borsten unter einem Winkel zur Drehachse und sind mehrere solcher Wirkflächen vorhanden. Bei beiden Ausführungsformen sind die freien Flächen des Bürstenkopfs mit Borsten 13 oder Bündeln kürzerer Länge besetzt, die von den in der Hüllfläche 10 liegenden Borsten überragt sind.

Bei dem Ausführungsbeispiel gemäß Figur 4 liegen die Borstenenden auf einer streifenförmigen Hüllfläche 7 in S-Form, wobei die S-Kurve mit ihrem Umkehrpunkt in der Drehachse 5 des Bürstenkopfs 3 liegt. Im gezeigten Ausführungsbeispiel sind mehrere solcher S-förmigen Hüllflächen 7 nach Art eines Schaufelrades angeordnet. Auch hier ergeben sich eine Vielzahl von Wirkrichtungen an den Begrenzungskanten 8, 9 der Hüllflächen 7. Die in der Hüllfläche 7 liegenden Borsten sind in einem vollflächigen Borstenbesatz 13 angeordnet, den sie nach oben überragen.

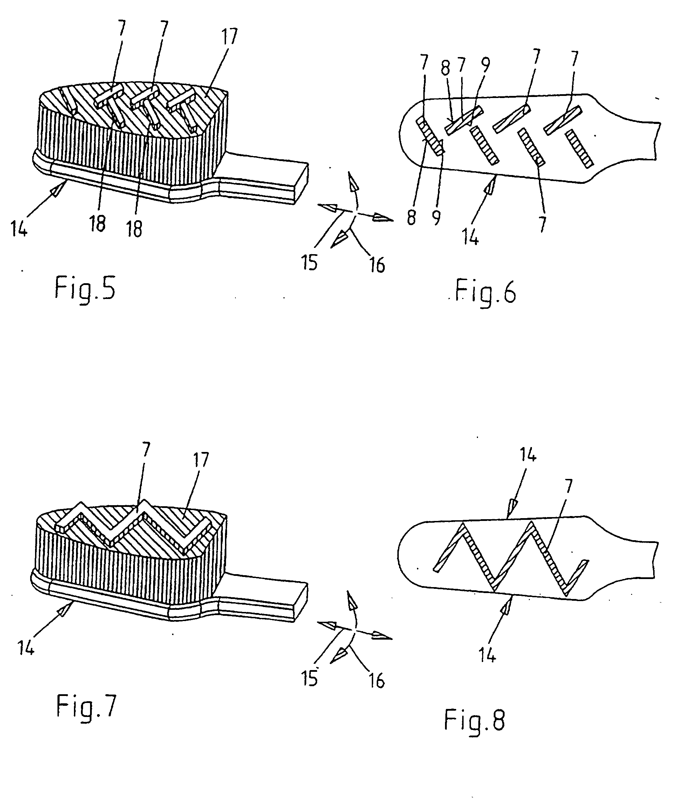

Fig. 5 bis 8 zeigen langgestreckte Bürstenköpfe 14, die in Richtung ihrer Längsachse, wie mit Doppelpfeil 15 angedeutet, linear angetrieben sind. Dieser Linearbewegung kann noch eine oszillierende Schwenkbewegung gemäß Doppelpfeil 16 quer zur Längsachse überlagert sein. Auf dem Bürstenkörper 14 ist wiederum ein flächiger Borstenbesatz 17 angeordnet, der von einer Gruppe von Borsten 18 oder Bündeln überragt wird, deren Enden auf streifenförmigen Hüllflächen 7 liegen. Die in Bewegungsrichtung vorne liegenden, von den Borsten der Hüllfläche 7 gebildeten Begrenzungskanten 8, 9 bilden wiederum einen Winkel zur Bewegungsrichtung 15, wobei der Winkel bei der Hinbewegung ein anderer ist als bei der Rückbewegung. Bei dem Ausführungsbeispiel gemäß Figur 5 und 6 sind die Hüllflächen 7 gepfeilt und zur Längsachse des Bürstenkopfs 14 versetzt angeordnet.

Bei der Ausführungsform gemäß Figuren 7 und 8 liegen die den vollflächigen Borstenbesatz 17 überragenden Borstehenden in einer zick-zack-förmigen, streifenartigen Hüllfläche 7.

## Patentansprüche

1. Bürste, insbesondere für eine Elektrozahnbürste, mit einem in wenigstens einer Richtung angetriebenen Bürstenkopf und daran befestigten Borsten, wobei die Enden zumindest eines Teils der Borsten den ansonsten vollflächigen Borstenbesatz überragen und auf einer streifen- oder fleckartigen Hüllfläche (7, 10) liegen und zumindest die von den in Bewegungsrichtung des Bürstenkopfs (3, 14) vorlaufenden Borsten gebildete Begrenzungskante (8, 9) der Hüllfläche (7, 10) in einem von 90° verschiedenen Winkel zur Bewegungsrichtung des Bürstenkopfs verläuft.

2. Bürste nach Anspruch 1, **dadurch gekennzeichnet, daß** die von den Borsten gebildete vorlaufende und nachlaufende Begrenzungskante (8, 9) der Hüllfläche (7, 10) im wesentlichen parallel zueinander verlaufen.

3. Bürste nach Anspruch 1, **dadurch gekennzeichnet, daß** die von den Borsten gebildete vorlaufende und nachlaufende Begrenzungskante (8, 9) der Hüllfläche (7, 10) unter verschiedenen Winkeln zur Bewegungsrichtung des Bürstenkopfs (3, 14) verlaufen.

4. Bürste nach einem der Ansprüche 1 bis 3, **dadurch gekennzeichnet, daß** bei einem um eine Drehachse (5) angetriebenen kreisförmigen Bürstenkopf (3) die vorlaufende Begrenzungskante der (8, 9) Hüllfläche (7) auf einer Kurve liegt, deren Krümmungsradius von dem Radius des Bürstenkopfs (3) verschieden ist.

5. Bürste nach Anspruch 4, **dadurch gekennzeichnet, daß** die Bengrenzungskante der Hüllfläche (7) auf einer Spirale liegt.

6. Bürste nach Anspruch 5, **dadurch gekennzeichnet, daß** die Spirale ihren Mittelpunkt in der Drehachse (5) des Bürstenkopfs (3) hat.

7. Bürste nach Anspruch 5, **dadurch gekennzeichnet, daß** die Spirale einen zur Drehachse (5) des Bürstenkopfs (3) exzentrischen Mittelpunkt aufweist.

8. Bürste nach Anspruch 4, **dadurch gekennzeichnet, daß** die vorlaufende Begrenzungskante auf einer S-förmigen Kurve liegt, deren Umkehrpunkt auf oder nahe der Drehachse (5) des Bürstenkopfs (3) liegt.

9. Bürste nach Anspruch 8, **dadurch gekennzeichnet, daß** mehrere streifenförmige Hüllfiächen (7) mit S-förmigem Umriß und gemeinsamem Mittelpunkt im Umkehrpunkt der S-Kurve vorgesehen sind.

10. Bürste nach einem der Ansprüche 1 bis 3, **dadurch gekennzeichnet, daß** bei einem um eine Drehachse angetriebenen Bürstenkopf (3) die Hüllflächen (7) mit ihrem Flächenschwerpunkt außerhalb der Drehachse (5) des Bürstenkopfs (3) angeordnet sind.

11. Bürste nach Anspruch 10, **dadurch gekennzeichnet, daß** die Hüllflächen (7) zur Gänze außerhalb der Drehachse (5) des Bürstenkopfs (3) liegen.

12. Bürste nach einem der Ansprüche 1 bis 3, **dadurch gekennzeichnet, daß** bei einem langgestreckten Bürstenkopf (14) mit einem zumindest in dessen Längsachse wirksamen Linearantrieb (15) streifenförmige Hüllflächen (7) sich zick-zack- oder wellenförmig in Längsrichtung erstrecken.

13. Bürste nach einem der Ansprüche 1 bis 3, **dadurch gekennzeichnet, daß** bei einem langestreckten Bürstenkopf (14) mit einem zumindest in dessen Längsachse wirksamen Linearantrieb (15) die Hüllflächen (7) mit ihren Flächenschwerpunkten außerhalb der Längsachse liegen.

14. Bürste nach einem der Ansprüche 1 bis 3, **dadurch gekennzeichnet, daß** bei einem langgestreckten Bürstenkopf (14) mit einem in seiner Längsachse wirksamen Linearantrieb (15) streifenförmige Hüllflächen (7) in Längsrichtung gepfeilt und zu beiden Seiten der Längsachse versetzt angeordnet sind.

## Claims

1. Brush, in particular for an electrical toothbrush, with a brush head driven in at least one direction with bristles attached thereto, wherein the ends of at least one portion of the bristles protrude past the remaining evenly covering bristle stock and lie within a striped or spotted enveloping surface (7, 10) and at least the bordering edge (8, 9) of the enveloping surface (7, 10) formed from those bristles leading in the direction of motion of the brush head (3, 14) extends at an angle relative to the direction of motion of the brush head which differs from 90°.

2. Brush according to claim 1, **characterized in that** the bordering edges (8, 9) of the enveloping surface (7, 10) formed by the leading and trailing bristles are substantially parallel to each other.

3. Brush according to claim 1, **characterized in that** the border edges (8) of the enveloping surface (7, 10) formed by the leading and trailing bristles extend at differing angles with respect to the direction of motion of the brush head (3, 14).

4. Brush according to any one of the claims 1 through 3, **characterized in that**, with a brush head (3) driven in a circular manner about an axis of rotation (5), the leading border edge (8, 9) of the enveloping surface (7) lies on a curve whose radius of curvature differs from the radius of the brush head (3).

5. Brush according to claim 4, **characterized in that** the border edge of the enveloping surface (7) lies along a spiral.

6. Brush according to claim 5, **characterized in that** the spiral has a middle point lying in the axis of rotation (5) of the brush head (3).

7. Brush according to claim 5, **characterized in that** the spiral has a middle point which is eccentric with respect to the axis of rotation (5) of the brush head (3).

8. Brush according to claim 4, **characterized in that** the leading border edge lies along an S-shaped curve whose cusp point lies on or is proximate to the axis of rotation (5) of the brush head (3).

9. Brush according to claim 8, **characterized by** a plurality of strip like enveloping surfaces (7) having an S-shaped contour and a common middle point at the cusp point of the S-curves.

10. Brush according to any one of the claims 1 through 3, **characterized in that**, with a brush head (3) driven about an axis of rotation, the surface centers of gravity of the enveloping surfaces (7) are disposed outside the axis of rotation (5) of the brush head (3).

11. Brush according to claim 10, **characterized in that** the enveloping surfaces (7) lie entirely outside of the axis of rotation (5) of the brush head (3).

12. Brush according to any one of the claims 1 through 3, **characterized in that**, with an elongated brush head (14) having a linear drive (15) acting at least along its longitudinal axis, strip-shaped enveloping surfaces (7) extend in a zigzagged or waved manner in the longitudinal direction.

13. Brush according to any one of the claims 1 through 3, **characterized in that**, with an elongated brush head (14) having a linear drive (15) acting at least along its longitudinal axis, the enveloping surfaces (7) lie, with their surface centers of gravity, outside of the longitudinal axis.

14. Brush according to any one of the claims 1 through 3, **characterized in that**, with an elongated brush head (14) having a linear drive (15) acting along its longitudinal axis, stripe-shaped enveloping surfaces (7), arrowed in a longitudinal direction, are disposed at both sides of the longitudinal axis in a displaced fashion.

## Revendications

1. Brosse, notamment pour une brosse à dents électrique comprenant une tête de brosse entraînée dans au moins une direction et des poils de brosse fixés sur celle-ci, dans laquelle les extrémités d'au moins une partie des poils dépassent de la garniture de poils par ailleurs entièrement plane et sont situées dans une surface enveloppante (7,10) du genre rayures ou points et dans laquelle au moins l'arête de délimitation (8,9) de la surface enveloppante (7,10) formée par les poils de devant par rapport à la direction de mouvement de la tête de brosse (3,14) s'étend selon un angle différent de 90° par rapport à la direction de mouvement de la tête de brosse.

2. Brosse selon la revendication 1, **caractérisée en ce que** les arêtes avant et arrière de délimitation (8,9) de la surface enveloppante (7,10)) formées par les poils s'étendent sensiblement parallèles l'une à l'autre.

3. Brosse selon la revendication 1, **caractérisée en ce que** les arêtes avant et arrière de délimitation (8,9) de la surface enveloppante (7,10) formées par les poils s'étendent selon des angles différents par rapport à la direction de mouvement de la tête de brosse (3,14).

4. Brosse selon l'une quelconque des revendications 1 à 3, **caractérisée en ce que** pour une tête de brosse (3) circulaire entraînée autour d'un axe de rotation (5), l'arête avant de délimitation (8,9) de la surface enveloppante (7) est située sur une courbe dont le rayon de courbure est différent du rayon de la tête de brosse (3).

5. Brosse selon la revendication 4, **caractérisée en ce que** la surface de délimitation de la surface enveloppante (7) est située sur une spirale.

6. Brosse selon la revendication 5, **caractérisée en ce que** le point central de la spirale est situé sur l'axe de rotation (5) de la tête de brosse (3).

7. Brosse selon la revendication 5, **caractérisée en ce que** la spirale présente un point central excentré par rapport à l'axe de rotation (5) de la tête de brosse (3).

8. Brosse selon la revendication 4, **caractérisée en ce que** l'arête de délimitation avant est située sur une courbe en forme de "S" dont le point d'inversion est situé sur ou à proximité de l'axe de rotation (5) de la tête de brosse (3).

9. Brosse selon la revendication 8, **caractérisée en ce que** l'on prévoit plusieurs surfaces enveloppantes (7) en forme de rayures à profil en forme de "S" et point central commun dans le point d'inversion de la courbe en "S".

10. Brosse selon l'une quelconque des revendications 1 à 3, **caractérisée en ce que** pour une tête de brosse (3) entraînée autour d'un axe de rotation, les surfaces enveloppantes (7) sont disposées en-dehors de l'axe de rotation (5) de la tête de brosse (3) au niveau de leur centre de gravité de surface.

11. Brosse selon la revendication 10, **caractérisée en ce que** la surface enveloppante (7) est entièrement située en-dehors de l'axe de rotation (5) de la tête de brosse (3).

12. Brosse selon l'une quelconque des revendications 1 à 3, **caractérisée en ce que** pour une tête de brosse allongée (14) comprenant un entraînement linéaire (15) actif au moins dans son axe longitudinal, des surfaces enveloppantes (7) en forme de rayures s'étendent en direction longitudinale en forme de zigzags ou de vagues.

13. Brosse selon l'une quelconque des revendications 1 à 3, **caractérisée en ce que** pour une tête de brosse (14) allongée comprenant un entraînement linéaire (15) actif au moins dans son axe longitudinal, les surfaces enveloppantes (7) sont situées en-dehors de l'axe longitudinal au niveau de leurs centres de gravité de surface.

14. Brosse selon l'une quelconque des revendications 1 à 3, **caractérisée en ce que** pour une tête de brosse (14) allongée comprenant un entraînement linéaire (15) actif dans son axe longitudinal, des surfaces enveloppantes (7) sont disposées en flèches dans le sens longitudinal et décalées de part et d'autre de l'axe longitudinal.
